# EUROPÄISCHE PATENTSCHRIFT

(11) **EP 2 377 707 B1**
(45) Veröffentlichungstag und Bekanntmachung des Hinweises auf die Patenterteilung: **24.10.2018**
(21) Anmeldenummer: 11162055.5
(22) Anmeldetag: 12.04.2011
(51) Int. Cl.: B60J 7/08, B60J 7/06

(54) **Abdeckanordnung für Behälter**
Cover assembly for containers
Agencement de recouvrement pour récipients

(30) Priorität: 15.04.2010 DE 102010027830; 20.08.2010 DE 102010039600
(43) Veröffentlichungstag der Anmeldung: 19.10.2011
(73) Patentinhaber: Franz Xaver Meiller Fahrzeug- und Maschinenfabrik-GmbH & Co KG, 80997 München (DE)
(72) Erfinder: Popp, Klaus, 82346 Andechs (DE)
(74) Vertreter: Weickmann & Weickmann PartmbB

(56) Entgegenhaltungen:
- EP-A1- 0 409 340
- WO-A1-2010/010152
- WO-A1-2010/054970
- DE-U1-202008 015 088
- US-A- 4 302 043

## Beschreibung

Die vorliegende Erfindung betrifft eine Abdeckanordnung zur Abdeckung eines Behälters mit einer insbesondere rechteckigen Grundfläche, die von Seitenwänden, begrenzt ist, wobei die Abdeckanordnung eine sich von einer ersten zu einer zweiten Seitenwand erstreckenden Welle umfasst, mittels welcher eine Abdeckplane abrollbar bzw. aufrollbar ist und die an einem ihrer axialen Enden eine Antriebsvorrichtung umfasst, und eine am Behälter befestigbare oder befestigte Führungseinrichtung aufweist, an welcher die Welle mit ihrem der Antriebsvorrichtung gegenüberliegenden axialen Ende abgestützt ist, wobei die Welle an der Führungseinrichtung unter Formschluss abrollbar ist und wobei an dem an der Führungseinrichtung abgestützten axialen Ende der Welle ein mit der Welle drehfest verbundenes Zahnrad angeordnet ist.

Eine derartige Abdeckanordnung ist aus der US 3,667,802 bekannt. Bei dieser bekannten Abdeckanordnung ist die Welle mittels zweier Zahnräder an ihren jeweiligen axialen Enden abgestützt. Die Abstützung der Welle mittels Zahnrädern führt zu größerer Reibung bei der Abrollbewegung der Welle.

Eine weitere Abdeckanordnung ist aus der DE 20 2008 015 088 U1 bekannt. Die dort gezeigte Abdeckung basiert auf dem Prinzip von Reibschluss zwischen der Welle und der Führungseinrichtung, wobei dieser Reibschluss durch ein an der Führungseinrichtung angebrachtes Gummiband noch verbessert werden soll. Eine Abrollbewegung durch Reibschluss führt zu einem relativ hohen Verschleiß an der Welle und an der Führungseinrichtung. Sofern ein Gummiband vorgesehen ist, muss dieses regelmäßig ausgetauscht werden. Ferner kann es bei unzureichendem Reibschluss zu einem wenigstens teilweisen Durchdrehen der Welle relativ zur Führungseinrichtung kommen, d.h. die Welle wird gedreht, aber sie bewegt sich nicht oder nur wenig aufgrund von Schlupf zwischen der Welle und der Führungseinrichtung. Dies kann auch zu einem Verkanten der Welle und der Führungseinrichtung führen, so dass die Abrollbewegung der Welle stark beeinträchtigt ist, was für die Handhabung nachteilig ist.

Aufgabe der Erfindung ist es, eine gattungsgemäße Abdeckanordnung derart weiterzubilden, dass die obigen Nachteile vermieden werden können.

Zur Lösung dieser Aufgabe wird vorgeschlagen, dass bei einer gattungsgemäßen Abdeckanordnung an dem an der Führungseinrichtung abgestützten Ende der Welle ein vom Zahnrad gesondertes und die Welle an der Führungseinrichtung abstützendes Stützmittel vorgesehen ist, das entlang der Führungseinrichtung beweglich ist.

Der Formschluss, welcher zwischen der Welle und der Führungseinrichtung hergestellt werden kann oder hergestellt ist, ermöglicht eine definierte Abrollbewegung der Welle relativ zur Führungseinrchtung, wobei die Welle reibungsarm mittels des gesonderten Stützmittels an der Führungseinrichtung gelagert ist und wobei ein Durchdrehen der Welle verhindert werden kann. Hierdurch ist es insbesondere möglich die Anzahl Umdrehungen der Welle von einem Zustand mit aufgerollter Abdeckplane (Öffnungsstellung) zu einem Zustand mit abgerollter Abdeckplane (Abdeckstellung) festzulegen und beizubehalten. Ferner wird durch den Formschluss auch einem übermäßigen Verkanten zwischen Welle und Führungseinrichtung entgegengewirkt, so dass die Bedienung einfach und sicher ist. Das gesonderte Stützmittel ermöglicht die Abstützung der Welle ohne dass Stützkräfte über das Zahnrad abgestützt werden müssen, was zu geringerem Verschleiß beim Zahnrad führt.

Ferner wird vorgeschlagen, dass das Stützmittel durch eine mit der Welle drehfest verbundene Abrollscheibe gebildet ist.

Alternativ hierzu kann es vorgesehen sein, dass das Stützmittel eine die Welle aufnehmende Hülse umfasst, wobei vorzugsweise die Welle drehbar in der Hülse aufgenommen ist und die Hülse drehfest mit einem Lagerblock, insbesondere Gleitlager, verbunden ist.

Dabei können das Zahnrad und die Abrollscheibe in axialer Richtung hintereinander angeordnet sein, vorzugsweise unmittelbar aneinander anschließend.

Um den Formschluss herstellen zu können wird weiter daran gedacht, dass die Führungseinrichtung einen mit dem Zahnrad in Eingriff bringbaren oder stehenden Zahnstangenabschnitt umfasst.

Um eine reibungsarme und kontinuierliche Abrollbewegung der Welle zu ermöglichen, umfasst die Führungseinrichtung vorzugsweise einen die Abrollscheibe bzw. den Lagerblock abstützenden Trägerabschnitt.

Durch die oben erwähnten Maßnahmen werden bei Drehung der Welle, das Zahnrad und die Laufrolle ebenfalls in Drehung versetzt und entlang der Führungseinrichtung abgerollt. Dabei greifen die Zähne des Zahnrads in Zwischenräume des Zahnstangenabschnitts zwecks Vortriebs der Welle ein und die Laufrolle bewegt sich reibungsarm auf dem Trägerabschnitt. Zahnstangenabschnitt und Trägerabschnitt sind dabei parallel zueinander und im Wesentlichen senkrecht zur Wellenachse angeordnet. Im Falle der Lagerung der Welle in der Hülse gleitet die Hülse mittels des Lagerblocks (Gleitlager) entlang der Führungseinrchtung. Die Abrollbewegung der Welle bzw. des Zahnrads wird dabei in eine translatorische Verschiebung des Lagerblocks umgesetzt.

Weiterbildend wird vorgeschlagen, dass an dem an der Führungseinrichtung abgestützten axialen Ende der Welle ferner eine relativ zur Welle bewegliche Abstandsscheibe angeordnet ist. Die Abstandsscheibe kann ringartig ausgebildet sein, lose auf dem Außenumfang der Welle sitzen und kann somit relativ zur Welle um die Wellenachse verdreht und in axialer Richtung entlang der Welle bewegt werden.

Um das Abrollen der Welle leichtgängig aber trotzdem gut geführt zu ermöglichen ist es bevorzugt, dass die Führungseinrichtung einen im Wesentlichen C-förmigen Querschnitt aufweist, mit einem im bestimmungsgemäßen Gebrauch im Wesentlichen horizontalen Basisabschnitt, einem damit verbundenen Vertikalabschnitt, einem dem Basisabschnitt gegenüberliegenden und mit dem Vertikalabschnitt verbundenen Abdeckabschnitt und einem damit verbundenen Axialführungsabschnitt.

Dabei ist insbesondere vorgesehen, dass der Basisabschnitt den Zahnstangenabschnitt und den Trägerabschnitt umfasst. Die Welle ist somit mittels der Abrollscheibe auf dem Trägerabschnitt der Basis der Führungseinrichtung abgestützt und steht mittels der Zähne des Zahnrads in Eingriff mit dem Zahnstangenabschnitt der Basis, so dass eine reibungsarme und im Wesentlichen schlupffreie Abrollbewegung der Welle entlang der Führungseinrichtung ermöglicht ist. Alternativ, insbesondere im Falle der Aufnahme der Welle in der Hülse, kann der Basisabschnitt nur den Trägerabschnitt aufweisen und der Zahnstangenabschnitt kann im Abdeckabschnitt ausgebildet sein.

Um die Führung der Welle in der Führungseinrichtung weiter zu verbessern wird vorgeschlagen, dass durch Zusammenwirken von Abstandsscheibe und Axialführungsabschnitt der Führungseinrichtung eine axiale Bewegung der Welle in Richtung zur Antriebsvorrichtung begrenzt ist. Neben dieser Begrenzung in axialer Richtung wirkt die Abstandsscheibe auch einem Verkanten der Welle, insbesondere der Abrollscheibe und des Zahnrades in der Führungseinrichtung entgegen.

Bevorzugt sind die Abrollscheibe oder die Hülse, das Zahnrad und die Abstandsscheibe in axialer Richtung vom der Führungseinrichtung zugewandten Wellenende in dieser Reihenfolge hintereinander angeordnet. Das Zahnrad ist also zwischen der außen liegenden Abrollscheibe bzw. Hülse und der innenliegenden Abstandsscheibe angeordnet.

Als Antriebsvorrichtung kann eine gelenkig mit der Welle verbundene Kurbel vorgesehen sein, die vorzugsweise über ein Kardangelenk mit der Welle gekoppelt ist. Die Antriebsvorrichtung kann auch lösbar mit der Welle verbunden sein.

Es wird vorgeschlagen, dass die Welle im abgerollten oder aufgerollten Zustand der Abdeckplane im Bereich ihres antriebsseitigen axialen Endes in einer jeweiligen am Behälter vorgesehenen Abstützeinrichtung aufnehmbar oder aufgenommen ist.

Während des Abrollens der Welle kann das antriebsseitige Ende der Welle auf einem oberen Rand der betreffenden Seitenwand oder einem an dieser Seitenwand angebrachten Abrollstützelement, etwa einer Stange oder dergleichen, abgestützt und abgerollt werden.

Die Welle kann mittels der Kurbel im abgerollten oder aufgerollten Zustand der Abdeckplane (Öffnungsstellung bzw. Abdeckstellung) am Behälter befestigt werden. Dabei wird durch die im Wesentlichen drehfest am Behälter arretierte Kurbel mittels des Kardangelenks eine Bewegungshemmung der Welle erreicht. Durch den Eingriff des Zahnrads in den Zahnstangenabschnitt, kann auch keine translatorische Verschiebung der Welle relativ zur bzw. entlang der Führungseinrichtung erfolgen, so dass die Welle durch die Abstützung an der Führungseinrichtung und an der jeweiligen behälterseitigen Abstützeinrichtung sowie durch die gehemmte Drehung der Kurbel in den oben genannten Stellungen sicher gehalten ist.

Gemäß einem weiteren Aspekt betrifft die Erfindung auch einen Behälter, insbesondere Fahrzeugmuldenbehälter mit einer Abdeckanordnung, die wenigstens eines der oben beschriebenen Merkmale aufweist.

Ferner betrifft die Erfindung auch ein Lastentransportfahrzeug mit einem solchen Behälter, wobei der Behälter vorzugsweise als Kippmulde oder als Pritsehe ausgeführt ist und wobei vorzugsweise die Welle der Abdeckanordnung in Längsrichtung des Fahrzeugs verläuft und die Führungseinrichtung an einer bezogen auf die Fahrrichtung vorderen Seitenwand des Behälters angebracht ist.

Die Erfindung wird nachfolgend unter Bezugnahme auf die anliegenden Figuren beispielhaft und nicht einschränkend anhand von zwei Ausführungsformen beschrieben.
- Fig. 1: zeigt eine schematische Perspektivdarstellung eines Behälters in Form eines Fahrzeugmuldenbehälters mit einerAbdeckanordnung.
- Fig. 2: zeigt einen vergrößerten Ausschnitt im Bereich einer Antriebsvorrichtung der Abdeckanordnung gemäß einer ersten Ausführungsform entsprechend dem strichpunktiert umrissenen Bereich II der Fig. 1.
- Fig. 3: einen vergrößerten Ausschnitt im Bereich einer Führungseinrichtung der Abdeckanordnung gemäß dem strichpunktiert eingekreisten Bereich III der Fig. 1.
- Fig. 4: zeigt eine stärkere Vergrößerung der Fig. 3.
- Fig. 5: zeigt eine zur Fig. 4 ähnliche Perspektivdarstellung einer zweiten Ausführungsform der Abdeckanordnung.
- Fig. 6: zeigt eine vereinfachte schematische Schnittdarstellung entsprechend der Schnittlinie VI-VI der Fig. 5.

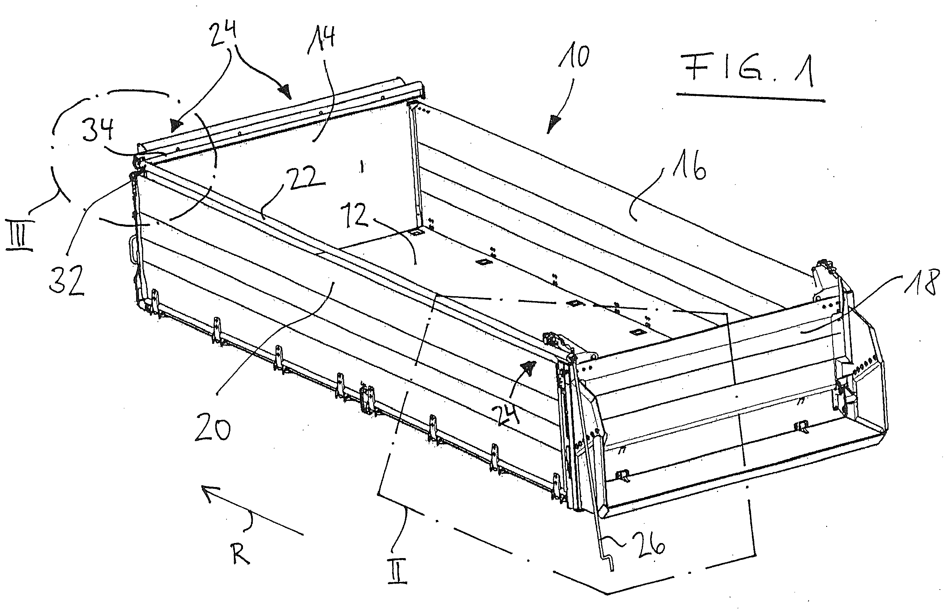

In Fig. 1 ist in einer vereinfachten und schematischen Perspektivansicht ein Fahrzeugmuldenbehälter 10 dargestellt mit seinen eine Grundfläche 12 begrenzenden Seitenwänden, 14, 16, 18 und 20. Der Behälter 10 kann auf einem hier nicht dargestellten Lastentransportfahrzeug angebracht sein, wobei die Seitenwand 14 normalerweise anschließend an ein Fahrerhaus des Fahrzeugs angeordnet ist, also bezogen auf die Fahrrichtung bzw. Längsrichtung R vorne liegt. Somit bilden sie Seitenwände 14 und 18 eine Vorderwand 14 und eine Hinterwand 18 des Behälters 10 und die Seitenwände 16 und 20 bilden seitliche Längswände 16 und 20 des Behälters 10. Im dargestellten Beispiel sind die Seitenwände 16, 18 und 20 schwenkbar ausgeführt, was allerdings keine Einschränkung der Erfindung darstellt.

Entlang den Längswänden 16, 20 erstreckt sich eine Welle 22 einer am Behälter 10 angebrachten Abdeckanordnung 24. Die Welle 22 verläuft von der Vorderwand 14 bis zur Hinterwand 18 des Behälters 10. Mittels der Welle 22 ist eine hier nicht dargestellte Abdeckplane ab- bzw. aufrollbar, die im abgerollten Zustand den Behälter 10 und dessen Inhalt im Wesentlichen vollflächig abdeckt und im aufgerollten Zustand zusmammen mit der Welle 22 entlang einer Längswand, vorzugsweise der Längswand 20 angeordnet werden kann.

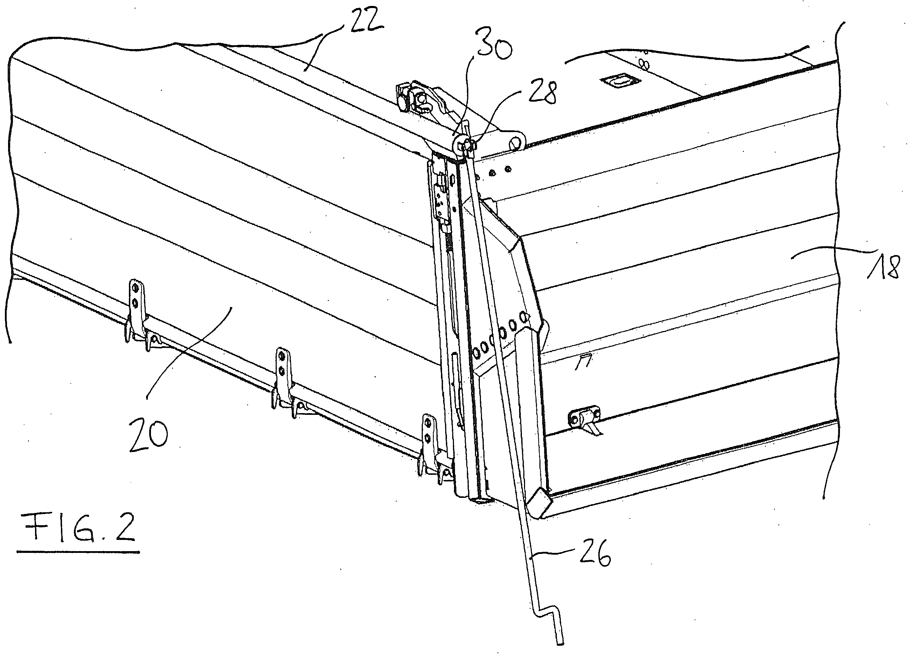

Aus der vergrößerten Fig. 2 ist ersichtlich, dass als Antrieb für die Welle 22 eine Handkurbel 26 dient, die mittels eines Kardangelenks 28 mit dem antriebsseitigen axialen Ende 30 der Welle 22 verbunden ist. Das antriebsseitige Ende 30 der Welle 22 kann in dem in den Fig. 1 und 2 dargestellten Zustand (Öffnungsstellung der Abdeckplane) in einem hier nicht dargestellten Abstützelement aufgenommen sein, das am Behälter 10 angebracht ist. Ein solches Abstützelement kann beispielsweise durch ein winkliges, insbesondere L-förmiges Profilstück gebildet sein, auf dessen horizontalem Abschnitt die Welle 22 aufliegt und an dessen vertikalem Abschnitt die Welle 22 gegen Herunterfallen zur Außenseite des Behälters 10 hin gehindert ist.

Beim Betätigen der Kurbel 26, wird die Welle 22 in Drehung versetzt und rollt sich entlang den Seitenwänden 14 und 18 (Vorder- bzw. Hinterwand) über den Behälter 10 hinweg ab, wobei sie mit ihrem vom Antrieb 26 abgewandten Ende 32 an einer quer zur Längsrichtung R angeordneten Führungseinrichtung 34 abgestützt ist (Fig. 1).

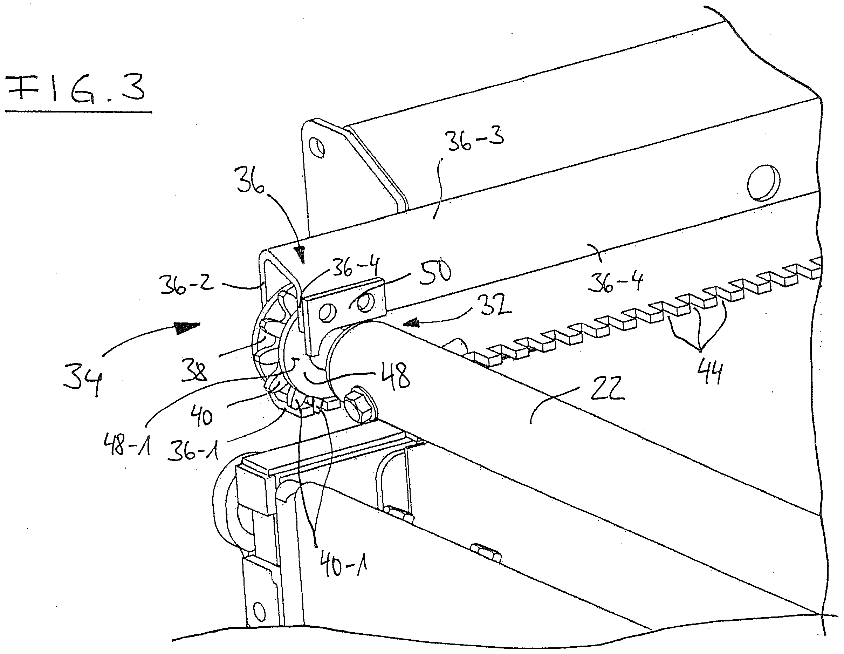

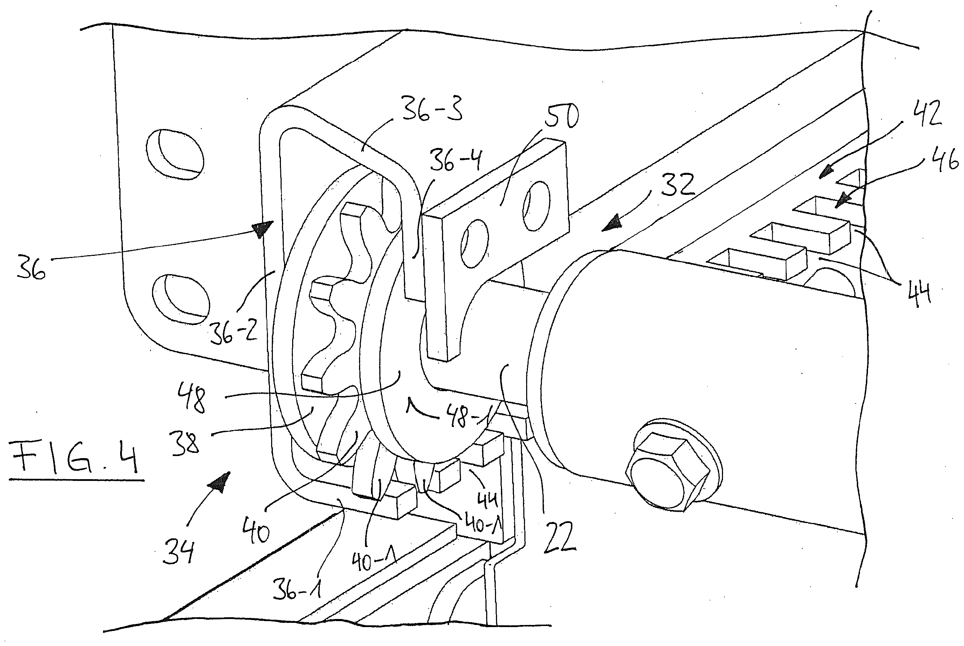

Aus den Fig. 3 und 4 ist in vergrößerter schematischer Perspektivansicht ein Teil der Führungseinrichtung 34 und das entsprechende Ende 32 der Welle 22 dargestellt, gemäß einer ersten Ausführungsform.

Die Führungseinrichtung 34 umfasst ein schienenartiges Profilstück 36, das einen im Wesentlichen C-förmigen Querschnitt aufweist mit einem im bestimmungsgemäßen Gebrauch im Wesentlichen horizontalen Basisabschnitt 36-1, einem damit verbundenen Vertikalabschnitt 36-2, einem dem Basisabschnitt 36-1 gegenüberliegenden und mit dem Vertikalabschnitt 36-2 verbundenen Abdeckabschnitt 36-3 und einem damit verbundenen Axialführungsabschnitt 36-4.

Mit der Welle 22 sind eine Abrollscheibe 38 (Laufrolle) als Stützmittel und ein Zahnrad 40 drehfest verbunden, so dass diese beim Drehen der Welle entlang des Basisabschnitts 36-1 abgerollt werden. Dabei ist die Welle 22 mittels der Abrollscheibe 38 auf einem durch den Basisabschnitt 36-1 gebildeten Trägerabschnitt 42 abgestützt und das Zahnrad 40 ist mit seinen Zähnen 40-1 in Eingriff bringbar mit im Basisabschnitt 36-1 ausgebildeten Ausnehmungen 44 eines Zahnstangenabschnitts 46 des Basisabschnitts 36-1.

Ferner ist an der Welle 22 eine Abstandsscheibe 48 angeordnet, die ringförmig ausgebildet ist und relativ zur Welle 2 frei beweglich ist, also auf der Welle 22 drehbar und in axialer Richtung verschieblich angebracht ist. Die Abstandsscheibe 48 kann mit ihrer in axialer Richtung zum Behälter 10 gerichteten Fläche 48-1 in Kontakt mit dem Axialführungsabschnitt 36-4 kommen, so dass die Axialbewegung der Welle 22 in Richtung der Antriebsvorrichtung (Kurbel) 26 begrenzt ist. Ferner verhindert die Abstandsscheibe 48 ein übermäßiges Verkanten zwischen Abrollscheibe 38 bzw. Zahnrad 40 und dem Profilstück 36, wenn die Welle 22 nicht senkrecht zum Profilstück 36 ausgerichtet und bewegt wird. Ein gewisses Spiel zwischen Abrollscheibe 38 bzw. Zahnrad 40 und Profilstück 36 ist allerdings zulässig, um insbesondere in den Endstellungen, also der Öffnungsstellung und der Abdeckstellung, ein Verlagern des antriebsseitigen Endes 30 der Welle 22 in ein entsprechendes Abstützelement (nicht dargestellt) zu ermöglichen. Die Welle 22 kann in den Endstellungen in der Regel etwas geneigt zur Längsrichtung verlaufen, wobei sie dann also auch nicht parallel zu den seitlichen Längswänden 16 und 20 angeordnet sein kann. Um dieses Spiel zu gewährleisten und um einen möglichst reibungsarmen Abrollvorgang zu ermöglichen, weisen die Ausnehmungen 44 in axialer Richtung der Welle eine Länge auf, die etwas größer ist als die axiale Dicke der Zähne 40-1, so dass zumindest in axialer Richtung ein gewisses Spiel zwischen den Zähnen 40-1 und den betreffenden Ausnehmungen ermöglicht ist. Die axiale Bewegung der Welle 22 in Richtung des Vertikalabschnitts 36-2 wird durch die Abrollscheibe 38 oder durch eine nicht sichtbare Stirnfläche der Welle 22 erreicht. Dabei können die Abrollscheibe 38 oder die Welle 22 vorteilhaft so ausgebildet sein, dass zwischen Ihnen und dem Vertikalabschnitt 36-2 nur eine Art punktueller Kontakt möglich ist (im Gegensatz zu einer flächigen Anlage), um die Reibung zwischen ihnen zu verringern. Die Welle 22 kann zu diesem Zweck beispielsweise eine konvexe Stirnfläche aufweisen.

Aus den Fig. 3 und 4 ist ferner noch ein Anschlagelement 50 ersichtlich, das am Profilstück 36, insbesondere am Axialführungsabschnitt 36-4 angebracht ist. Das Anschlagelement begrenzt die Abrollbewegung der Welle 22 entlang dem Profilstück 36 zur Außenseite des Behälters 10 hin. Ein solches Anschlagelement kann selbstverständlich auch auf der anderen hier nicht dargestellten Seite (bei der Längswand 16) vorgesehen sein, um die dortige Endstellung der Welle 22 festzulegen.

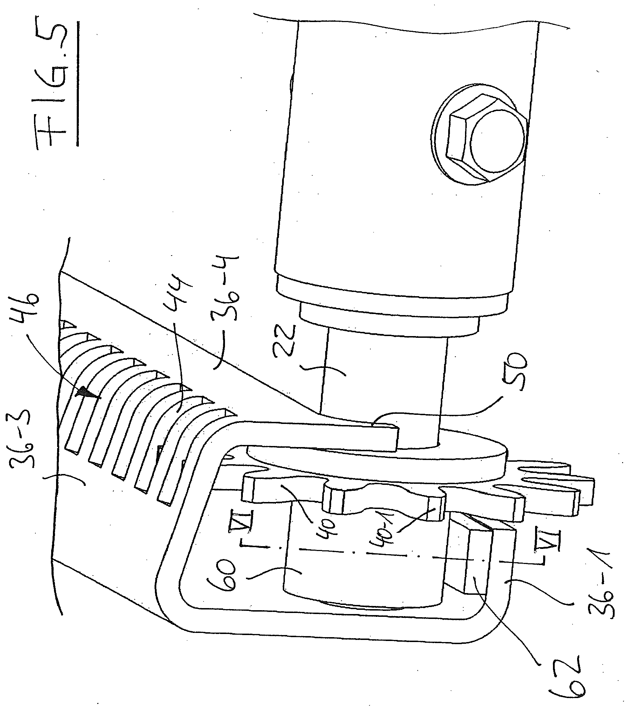

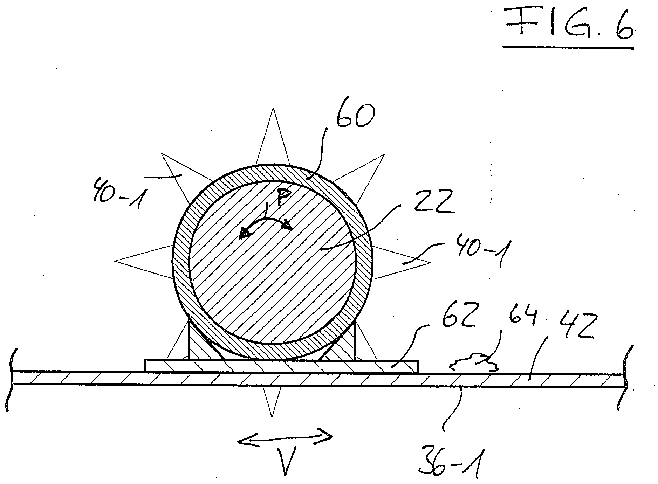

Fig. 5 zeigt eine zweite Ausführungsform der Abdeckanordnung, insbesondere deren Führungseinrichtung 34. Die Welle 22 ist bei dieser Ausführungsform in einer Hülse 60 aufgenommen und relativ zur Hülse 60 dehnbar. Dies ist insbesondere auch aus der gemeinsam mit der Fig. 5 zu betrachtenden Schnittdarstellung der Fig. 6 ersichtlich und durch den Pfeil P angedeutet. Die Hülse 60 ist auf einem Lagerblock 62 der vorzugsweise als ein Gleitlager bzw. Gleitschuh ausgebildet ist unverschieblich angebracht. Der Gleitschuh 62 liegt auf dem durch den Basisabschnitt 36-1 gebildeten Trägerabschnitt 42 auf und wird entlang dieses Trägerabschnitts 42 verschoben, wenn die Welle 22 in Drehung versetzt wird und die Zähne 40-1 des Zahnrads 40 mit den im Abdeckabschnitt 36-3 und zum Teil auch im Axialführungsabschnitt 36-4 ausgebildeten Ausnehmungen 44 kämmen. Die Hülse 60 und der Lagerblock 62 bilden in dieser Ausführungsform das Stützmittel, welches die Abstützung/Lagerung der Welle 22 an der Führungseinrichtung 34 übernimmt ohne dass Stützkräfte über das Zahnrad 40 übertragen werden.

Bei dieser zweiten Ausführungsform wird noch darauf hingewiesen, dass das Anschlagelement 50 einstückig mit dem Axialführungsabschnitt 36-4 ausgebildet ist. Diese einstückige Ausgestaltung des Anschlagelements 50 könnte auch bei der ersten Ausführungsform vorgesehen sein. Ebenso könnte ein gesondertes Anschlagelement 50, wie es in Fig. 4 für die erste Ausführungsform beschrieben worden ist, auch bei einer Ausgestaltung gemäß der zweiten Ausführungsform (Fig. 5) zum Einsatz kommen. Bei der zweiten Ausführungsform gemäß Fig. 5 und 6 kann das Profilstück 36 verglichen mit der ersten Ausführungsform kompakt ausgestaltet werden, da auf die Abrollscheibe verzichtet werden kann und das Zahnrad 40 mit den oben im Profilstück 36 ausgebildeten Ausnehmungen 44 kämmt. Beim Verschieben des Gleitschuhs 62 entlang dem Trägerabschnitt 42 kann der Gleitschuh 62 auch Verunreinigungen 64, die auf dem Trägerabschnitt 42 liegen, wegschieben.

Die hier vorgestellte Abdeckanordnung stellt eine einfache und kostengünstige Abdeckung für Behälter, insbesondere Fahrzeugmuldenbehälter dar, wobei die Abrollbewegung der die Abdeckplane tragenden Welle 22 aufgrund des gesonderten Stützmittels reibungsarm und definiert erfolgt. Ein Durchdrehen der Welle 22 beim Abrollen entlang des Profilstücks 36 ist aufgrund des kontinuierlichen Eingriffs zwischen Zahnrad 40 und Zahnstangenabschnitt 46 verhindert.

## Patentansprüche

1. Abdeckanordnung zur Abdeckung eines Behälters (10) mit einer Grundfläche (12), die von Seitenwänden (14, 16, 18, 20), begrenzt ist, wobei die Abdeckanordnung (24) umfasst:
eine sich von einer ersten zu einer zweiten Seitenwand (14, 18) erstreckende Welle (22), mittels welcher eine Abdeckplane abrollbar bzw. aufrollbar ist und die an einem ihrer axialen Enden (30) eine Antriebsvorrichtung (26) umfasst, und
eine am Behälter (10) befestigbare oder befestigte Führungseinrichtung (34), an welcher die Welle (22) mit ihrem der Antriebsvorrichtung (26) gegenüberliegenden axialen Ende (32) abgestützt ist,
wobei ein die Welle (22) an der Führungseinrichtung abstützendes Stützmittel (38; 60, 62) vorgesehen ist, das entlang der Führungseinrichtung (34) beweglich ist,
wobei
die Welle (22) an der Führungseinrichtung (34) unter Formschluss abrollbar ist, wobei an dem an der Führungseinrichtung (34) abgestützten axialen Ende (32) der Welle (22) ein mit der Welle (22) drehfest verbundenes Zahnrad (40) angeordnet ist,
**dadurch gekennzeichnet,**
**dass** das Stützmittel (38; 60, 62) vom Zahnrad (40) gesondert ist und entweder durch eine mit der Welle (22) drehfest verbundene Abrollscheibe (38) gebildet ist oder eine die Welle aufnehmende Hülse (60) umfasst, wobei die Welle (22) drehbar in der Hülse (60) aufgenommen und die Hülse drehfest mit einem Gleitlagerblock (62) verbunden ist.

2. Abdeckanordnung nach Anspruch 1, bei der das Stützmittel (38; 60, 62) die Abrollscheibe (38) ist, **dadurch gekennzeichnet, dass** das Zahnrad (40) und die Abrollscheibe (38) in axialer Richtung hintereinander angeordnet sind, vorzugsweise unmittelbar aneinander anschließend.

3. Abdeckanordnung nach Anspruch 1 oder 2, **dadurch gekennzeichnet, dass** die Führungseinrichtung (34) einen mit dem Zahnrad (40) in Eingriff bringbaren oder stehenden Zahnstangenabschnitt (46) umfasst.

4. Abdeckanordnung nach einem der vorhergehenden Ansprüche, **dadurch gekennzeichnet, dass** die Führungseinrichtung (34) einen die Abrollscheibe (38) bzw. den Gleitlagerblock (62) abstützenden Trägerabschnitt (42) umfasst.

5. Abdeckanordnung nach Anspruch 4, **dadurch gekennzeichnet, dass** an dem an der Führungseinrichtung (34) abgestützten axialen Ende (32) der Welle (22) ferner eine relativ zur Welle (22) bewegliche Abstandsscheibe (48) angeordnet ist.

6. Abdeckanordnung nach einem der vorhergehenden Ansprüche, **dadurch gekennzeichnet, dass** die Führungseinrichtung (34, 36) einen im Wesentlichen C-förmigen Querschnitt aufweist, mit einem im bestimmungsgemäßen Gebrauch im Wesentlichen horizontalen Basisabschnitt (36-1), einem damit verbundenen Vertikalabschnitt (36-2), einem dem Basisabschnitt (36-1) gegenüberliegenden und mit dem Vertikalabschnitt (36-2) verbundenen Abdeckabschnitt (36-3) und einem damit verbundenen Axialführungsabschnitt (36-4).

7. Abdeckanordnung nach Anspruch 6, wenn abhängig von den Ansprüchen 3 und 4, **dadurch gekennzeichnet, dass** der Basisabschnitt (36-1) den Zahnstangenabschnitt (46) und den Trägerabschnitt (42) umfasst oder dass der Basisabschnitt (36-1) den Trägerabschnitt (42) und der Abdeckabschnitt (36-3) den Zahnstangenabschnitt (46) umfasst.

8. Abdeckanordnung nach Anspruch 6 oder 7, wenn abhängig von Anspruch 5, **dadurch gekennzeichnet, dass** durch Zusammenwirken von Abstandsscheibe (48) und Axialführungsabschnitt (36-4) der Führungseinrichtung (34, 36) eine axiale Bewegung der Welle (22) in Richtung zur Antriebsvorrichtung (26) begrenzt ist.

9. Abdeckanordnung nach einem der vorhergehenden Ansprüche, **dadurch gekennzeichnet, dass** als Antriebsvorrichtung eine gelenkig mit der Welle (22) verbundene Kurbel (26) vorgesehen ist, die vorzugsweise über ein Kardangelenk (28) mit der Welle (22) gekoppelt ist.

10. Abdeckanordnung nach Anspruch 9, **dadurch gekennzeichnet, dass** die Welle (22) im abgerollten oder aufgerollten Zustand der Abdeckplane im Bereich ihres antriebsseitigen axialen Endes (30) in einer jeweiligen am Behälter (10) vorgesehenen Abstützeinrichtung aufnehmbar oder aufgenommen ist.

11. Abdeckanordnung nach Anspruch 9 oder 10, **dadurch gekennzeichnet, dass** die Welle (22) mittels der Kurbel (26) im abgerollten oder aufgerollten Zustand der Abdeckplane am Behälter (10) befestigt werden kann.

12. Behälter, insbesondere Fahrzeugmuldenbehälter (10) mit einer Abdeckanordnung (24) nach einem der vorhergehenden Ansprüche.

13. Lastentransportfahrzeug mit einem Behälter nach Anspruch 12, wobei der Behälter (10) vorzugsweise als Kippmulde oder Pritsche ausgeführt ist und wobei vorzugsweise die Welle (22) der Abdeckanordnung (24) in Längsrichtung (R) des Fahrzeugs verläuft und die Führungseinrichtung (34) an einer bezogen auf die Fahrrichtung (R) vorderen Seitenwand (14) des Behälters (10) angebracht ist.

## Claims

1. Cover assembly for covering a container (10) having a base surface (12) which is delimited by lateral walls (14, 16, 18, 20), the cover assembly (24) comprising:
a shaft (22) extending from a first to a second lateral wall (14, 18), by means of which shaft a tonneau cover can be unrolled or rolled up and which shaft comprises a drive mechanism (26) at one of its axial ends (30), and
a guide means (34) which can be or is fastened to the container (10) and on which the shaft (22) is supported by means of the axial end (32) thereof that is opposite the drive mechanism (26),
a support means (38; 60, 62) being provided which supports the shaft (22) on the guide means and which is movable along the guide means (34),
it being possible to unroll the shaft (22) on the guide means (34) in a form-fit, a gear (40) that is connected to the shaft (22) for conjoint rotation being arranged at the axial end (32) of the shaft (22) that is supported on the guide means (34), **characterised in that** the support means (38; 60, 62) is separate from the gear (40) and is either formed by a roller disc (38) that is connected to the shaft (22) for conjoint rotation or comprises a bush (60) which receives the shaft, the shaft (22) being rotatably received in the bush (60) and the bush being connected to a sliding bearing block (62) for conjoint rotation.

2. Cover assembly according to claim 1, in which the support means (38; 60, 62) is the roller disc (38), **characterised in that** the gear (40) and the roller disc (38) are arranged one behind the other in the axial direction, and are preferably directly adjoined to one another.

3. Cover assembly according to either claim 1 or claim 2, **characterised in that** the guide means (34) comprises a toothed rack portion (46) which is in engagement or can be brought into engagement with the gear (40).

4. Cover assembly according to any of the preceding claims, **characterised in that** the guide means (34) comprises a carrier portion (42) supporting the roller disc (38) or the sliding bearing block (62).

5. Cover assembly according to claim 4, **characterised in that** a spacer disc (48) that is movable relative to the shaft (22) is also arranged at the axial end (32) of the shaft (22) that is supported on the guide means (34).

6. Cover assembly according to any of the preceding claims, **characterised in that** the guide means (34, 36) have a substantially C-shaped cross section, comprising a base portion (36-1) that is substantially horizontal when used as intended, a vertical portion (36-2) connected thereto, a cover portion (36-3) that is opposite the base portion (36-1) and connected to the vertical portion (36-2), and an axial guide portion (36-4) connected to said cover portion.

7. Cover assembly according to claim 6, when dependent on claims 3 and 4, **characterised in that** the base portion (36-1) comprises the toothed rack portion (46) and the carrier portion (42), or **in that** the base portion (36-1) comprises the carrier portion (42) and the cover portion (36-3) comprises the toothed rack portion (46).

8. Cover assembly according to either claim 6 or claim 7, when dependent on claim 5, **characterised in that**, on account of the interaction between the spacer disc (48) and the axial guide portion (36-4) of the guide means (34, 36), an axial movement of the shaft (22) is restricted in the direction of the drive mechanism (26).

9. Cover assembly according to any of the preceding claims, **characterised in that** a crank (26) is hingedly connected to the shaft (22) as the drive mechanism, and is preferably coupled to the shaft (22) by means of a universal joint (28).

10. Cover assembly according to claim 9, **characterised in that**, when the tonneau cover is in the unrolled or rolled-up state, the shaft (22) can be or is received, in the region of the drive-side axial end (30) thereof, in a relevant support means provided on the container (10).

11. Cover assembly according to either claim 9 or claim 10, **characterised in that**, when the tonneau cover is in the unrolled or rolled-up state, the shaft (22) can be fastened to the container (10) by means of the crank (26).

12. Container, in particular a vehicle dumper trough container (10), comprising a cover assembly (24) according to any of the preceding claims.

13. Load transport vehicle comprising a container according to claim 12, wherein the container (10) is preferably designed as a tipping body or drop-side body, and wherein the shaft (22) of the cover assembly (24) preferably extends in the longitudinal direction (R) of the vehicle and the guide means (34) is attached to a lateral wall (14) of the container (10) that is at the front with respect to the direction of travel (R).

## Revendications

1. Dispositif de recouvrement pour recouvrir un contenant (10) avec une surface de base (12), qui est limitée par des parois latérales (14, 16, 18, 20), dans lequel le dispositif de recouvrement (24) comprend :
un arbre (22) s'étendant d'une première à une deuxième paroi latérale (14, 18), à l'aide duquel une bâche de recouvrement peut être déroulée ou enroulée et qui comprend à une de ses extrémités axiales (30) un dispositif d'entraînement (26), et
un dispositif de guidage (34) pouvant être fixé ou fixé au contenant (10), sur lequel l'arbre (22) est appuyé avec son extrémité axiale (32) opposée au dispositif d'entraînement (26),
dans lequel est prévu un moyen de soutien (38 ; 60, 62) soutenant l'arbre (22) sur le dispositif de guidage, qui est mobile le long du dispositif de guidage (34),
dans lequel l'arbre (22) peut être déroulé par engagement de forme sur le dispositif de guidage (34), dans lequel sur l'extrémité axiale (32) de l'arbre (22), appuyée sur le dispositif de guidage (34), est disposée une roue dentée (40) solidaire en rotation avec l'arbre (22),
**caractérisé en ce que** le moyen de soutien (38 ; 60, 82) est séparé de la roue dentée (40) et, soit est formé par un disque de déroulement (38) solidaire en rotation avec l'arbre (22), soit comprend un manchon (60) logeant l'arbre, dans lequel l'arbre (22) est logé de façon rotative dans le manchon (60) et le manchon est relié de façon solidaire en rotation avec un bloc de palier lisse (62).

2. Dispositif de recouvrement selon la revendication 1, dans lequel le moyen de soutien (38 ; 60, 62) est le disque de déroulement (38), **caractérisé en ce que** la roue dentée (40) et le disque de déroulement (38) sont disposés l'un derrière l'autre dans le sens axial, de préférence de façon directement adjacente l'un à l'autre.

3. Dispositif de recouvrement selon la revendication 1 ou 2, **caractérisé en ce que** le dispositif de guidage (34) comprend une section à crémaillère (46) pouvant être mise en prise ou en prise avec la roue dentée (40).

4. Dispositif de recouvrement selon l'une des revendications précédentes, **caractérisé en ce que** le dispositif de guidage (34) comprend une section porteuse (42) soutenant le disque de déroulement (38) ou le bloc de palier lisse (62).

5. Dispositif de recouvrement selon la revendication 4, **caractérisé en ce qu'**à l'extrémité axiale (32) de l'arbre (22), appuyée sur le dispositif de guidage (34), est disposé un disque d'écartement (48) mobile par rapport à l'arbre (22).

6. Dispositif de recouvrement selon l'une des revendications précédentes, **caractérisé en ce que** le dispositif de guidage (34, 36) présente une section transversale essentiellement en forme de C, avec une section de base (36-1) essentiellement horizontale dans une utilisation en conformité avec sa spécification, une section verticale (36-2) reliée avec, une section de recouvrement (36-3) opposée à la section de base (36-1) et reliée à la section verticale (36-2) et une section de guidage axial (36-4) reliée avec.

7. Dispositif de recouvrement selon la revendication 6, lorsque cela dépend des revendications 3 et 4, **caractérisé en ce que** la section de base (36-1) comprend la section à crémaillère (46) et la section porteuse (42) ou **en ce que** la section de base (36-1) comprend la section porteuse (42) et la section de recouvrement (36-3) comprend la section à crémaillère (46).

8. Dispositif de recouvrement selon la revendication 6 ou 7, lorsque cela dépend de la revendication 5, **caractérisé en ce que** par interaction du disque d'écartement (48) et de la section de guidage axial (36-4) du dispositif de guidage (34, 36), un mouvement axial de l'arbre (22) en direction du dispositif d'entraînement (26) est limité.

9. Dispositif de recouvrement selon l'une des revendications précédentes, **caractérisé en ce que** comme dispositif d'entraînement est prévue une manivelle (26) reliée de façon articulée à l'arbre (22), qui est couplée de préférence à l'arbre (22) par une articulation à cardan (28).

10. Dispositif de recouvrement selon la revendication 9, **caractérisé en ce que** l'arbre (22) dans l'état déroulé ou enroulé de la bâche de recouvrement peut être logé ou est logé, dans la zone de son extrémité axiale (30) côté entraînement, dans un dispositif de support respectif prévu sur le contenant (10).

11. Dispositif de recouvrement selon la revendication 9 ou 10, **caractérisé en ce que** l'arbre (22) peut être fixé sur le contenant (10) à l'aide de la manivelle (26) dans l'état déroulé ou enroulé de la bâche de recouvrement.

12. Contenant, plus particulièrement contenant de benne de véhicule (10) avec un dispositif de recouvrement (24) selon l'une des revendications précédentes.

13. Véhicule de transport de charges avec un contenant selon la revendication 12, dans lequel le contenant (10) est réalisé de préférence comme une benne basculante ou un plateau et dans lequel, de préférence, l'arbre (22) du dispositif de recouvrement (24) passe dans le sens longitudinal (R) du véhicule et le dispositif de guidage (34) est agencé sur une paroi latérale (14) avant, par rapport au sens de roulement (R), du contenant (10).
